Europäisches Patentamt

European Patent Office

Office européen des brevets

(11) Publication number: **0 469 543 A2**

# EUROPEAN PATENT APPLICATION

(21) Application number: **91112791.8**

(22) Date of filing: **30.07.91**

(51) Int. Cl.⁵: **G06F 13/26**

(30) Priority: **31.07.90 KR 1165590**

(43) Date of publication of application:
**05.02.92 Bulletin 92/06**

(84) Designated Contracting States:
**DE FR IT**

(71) Applicant: **GOLD STAR CO. LTD**
**20 Yoido-Dong, Youngdungpo-ku**
**Seoul(KR)**

(72) Inventor: **Choi, Jae Boo**
**33-252 Kamman-2dong, Nam-ku**
**Pusan-si(KR)**

(74) Representative: **Vossius & Partner**
**Siebertstrasse 4 P.O. Box 86 07 67**
**W-8000 München 86(DE)**

(54) Multiple interrupt handling circuit.

(57) A multiple interrupt handling circuit comprising a mask register (4) for latching desired information from a microprocessor to generate a mask signal; a latch register (5) for latching desired information from said microprocessor to generate a latch signal; a plurality of interrupt units (6), each for inputting said mask signal and said latch signal from said mask and latch register (4,5) and a corresponding interrupt input signal and generating in sequence a corresponding interrupt output signal in response to a clocking signal based on a system interrupt signal; an encoder (7) for encoding said interrupt output signals from said plurality of interrupt units (6) to generate a plurality of status signals; and a control unit (9) for combining desired information signals from said microprocessor in read and write of information. Therefore, in accordance with the present invention, a multiplicity of interrupts can be handled all without exception in a system utilizing the microcomputer. More particularly, the present multiple interrupt handling circuit can be IC-ed such that it can be used as an interrupt handling-dedicated IC and contained in the central processing unit, thereby allowing its simple construction.

FIG. 2

EP 0 469 543 A2

The present invention relates in general to handling an interrupt during execution of a program in a microcomputer, and more particularly to a multiple interrupt handling circuit for handling a multiplicity of interrupts and being internal IC-ed in a central processing unit (CPU) or peripheral IC-ed for connection with the CPU.

Generally, an interrupt means that during execution of a program in a microcomputer a central control unit is forced to perform a control of another program beginning with a specific address. A conventional interrupt handling circuit, upon generation of the interrupt in the course of execution of a program in the microcomputer, interrupts the execution of the program and, at this point of time, returns significant data in the central control unit to a main storage unit and then forces the central control unit to perform the control of another program beginning with the specific address. Namely, the operation of the central control unit branches off to a preset interrupt handling routine for performing it and at completion of the handling returns to the original program to continue to perform the original task.

However, the conventional interrupt handling circuit has a disadvantage, in that it is impossible to handle a multiplicity of interrupts since it only allows the handling of one interrupt at a time.

Therefore, the present invention has been made in view of the above problem, and it is an object of the present invention to provide a multiple interrupt handling circuit for handling a multiplicity of interrupts with a priority being set.

In accordance with the present invention, the object can be accomplished by providing a multiple interrupt handling circuit, comprising: mask register means for latching desired information from a microprocessor to generate a mask signal; latch register means for latching desired information from said microprocessor to generate a latch signal; a plurality of interrupt means, each for inputting said mask signal and said latch signal from said mask and latch register means and a corresponding interrupt input signal and generating in sequence a corresponding interrupt output signal in response to a clocking signal based on a system interrupt signal; encoding means for encoding said interrupt output signals from said plurality of interrupt means to generate a plurality of status signals; and control means for combining desired information signals from said microprocessor in read and write of information.

The above and other objects, features and advantages of the present invention will be more clearly understood from the following detailed description taken in conjunction with the accompanying drawings, in which:

Fig. 1 is a functional block diagram of a microcomputer system enabling a multiple interrupt handling in accordance with the present invention;

Fig. 2 is a detailed circuit diagram of an interrupt handling unit of the present invention, shown in Fig. 1; and

Fig. 3 is a detailed circuit diagram of an interrupt unit in Fig. 2.

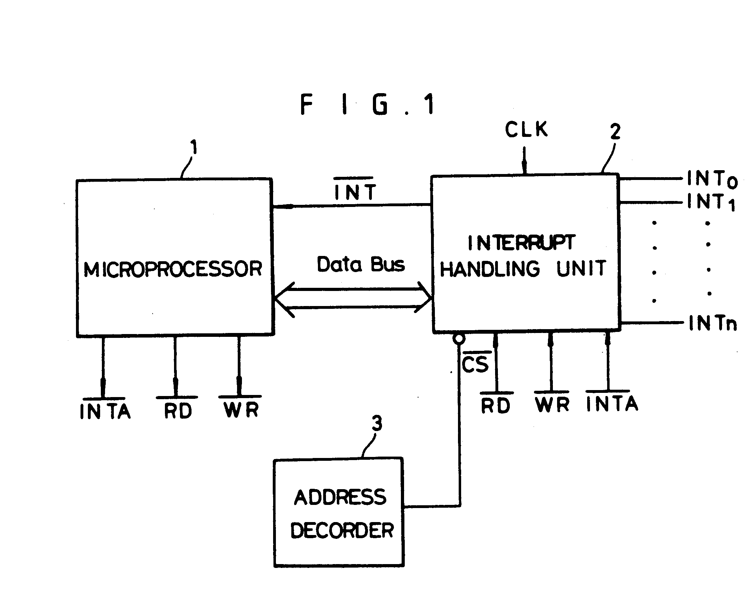

With reference to Fig. 1, there is shown a functional block diagram of a microcomputer system enabling a multiple interrupt handling in accordance with the present invention. The illustrated microcomputer comprises a microprocessor 1, an interrupt handling unit 2 for transferring an interrupt signal $\overline{INT}$ to the microprocessor 1, and an address decoder 3 for applying a control signal $\overline{CS}$ to the interrupt handling unit 2.

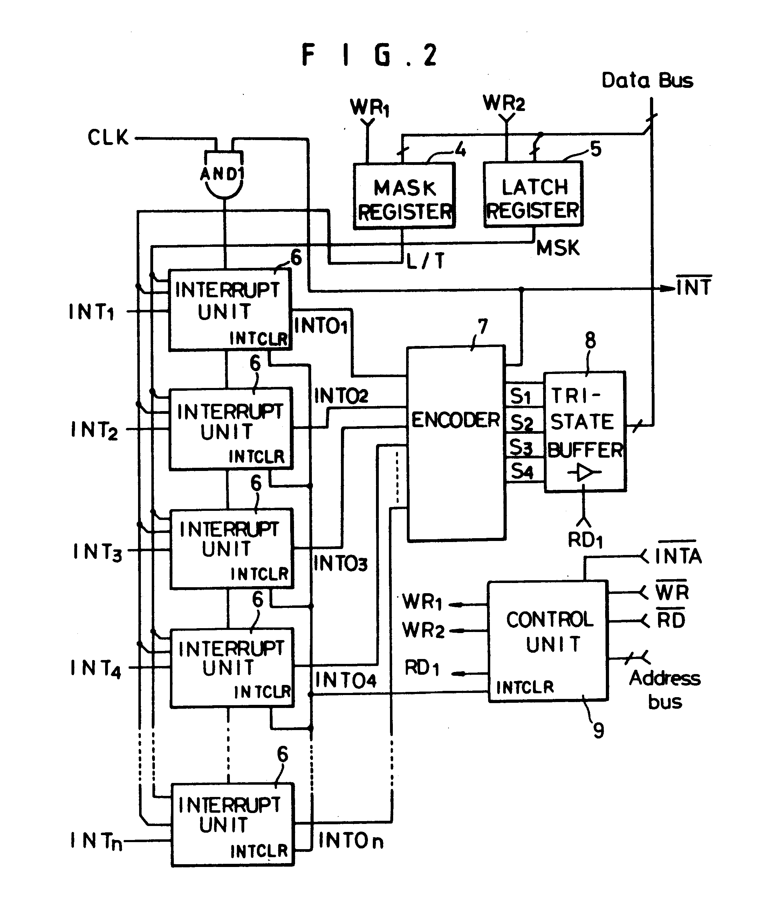

With reference to Fig. 2, there is shown a detailed circuit diagram of the interrupt handling unit 2 of the present invention. As shown in this drawing, the interrupt handling unit 2 of the present invention comprises a mask register 4 for latching desired information from the microprocessor 1 in response to a write signal WR1 to generate a mask signal MSK, a latch register 5 for latching desired information from the microprocessor 1 in response to a write signal WR2 to generate a latch signal L/T, a plurality of interrupt units 6 each for inputting a corresponding interrupt input signal INT1-INTn (wherein n is a positive integer), the mask signal MSK and the latch signal L/T from the mask and latch registers 4 and 5 respectively at an interrupt input terminal, a mask input terminal and a latch input terminal and generating in sequence a corresponding interrupt output signal INTO1-INTOn in response to a clocking signal CLK based on the interrupt signal $\overline{INT}$, an encoder 7 for encoding the interrupt output signals INTO1-INTOn from the interrupt units 6 to generate a plurality of status signals S1-S4, a tri-state buffer 8 for buffering tie status signals S1-S4 From the encoder 7 and outputting the buffered status signals S1-S4 to the microprocessor 1 in response to a read signal RD1, and a control unit 9 for combining an address signal ADS, a write signal $\overline{WR}$ and a read signal $\overline{RD}$ from the microprocessor 1 to apply the write signals WR1 and WR2 and the read signal RD1 to the mask and latch registers and the tri-state buffer 8.

It is noted that although the interrupt handling unit 2 of the preferred embodiment is constructed such that sixteen interrupts can be handled, the number of interrupts to be handled may be modified.

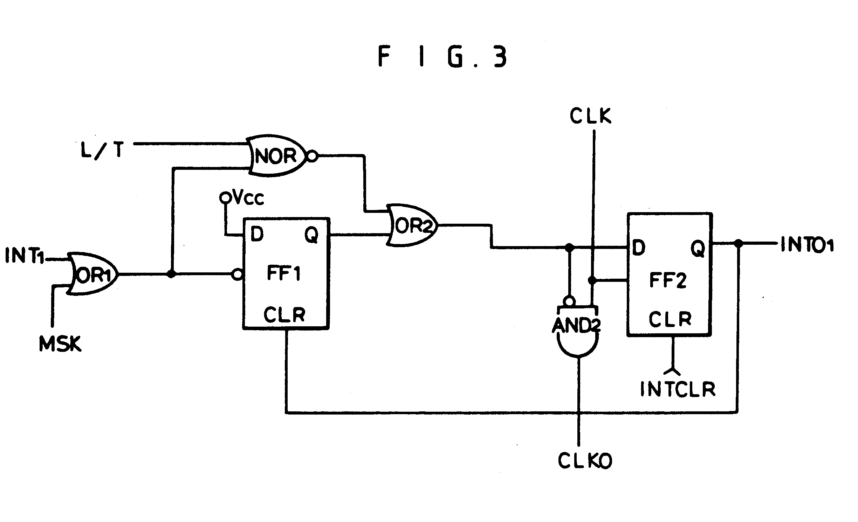

With reference to Fig. 3, there is shown a detailed circuit diagram of one of the interrupt units 6. Herein, constructions of the interrupt units 6 are identical to each other and hence only construction of the interrupt unit 6 will be illustrated and described which inputs the interrupt input signal INT1 and outputs the interrupt output signal INTO1.

As shown in the drawing, the interrupt unit 6 is provided with an OR gate OR1 for inputting the interrupt input signal INT1 and the mask signal MSK and ORing the signals INT1 and MSK, a NOR gate NOR for NORing art output signal from the OR gate OR1 and the latch signal L/T, a D flip-flop FF1 including an input terminal for inputting power source Vcc and a clock terminal for inputting the output terminal from the OR gate OR1 as a clock pulse signal, an OR gate OR2 for ORing an output signal from the NOR gate NOR and an output signal from the D flip-flop FF1, an AND gate AND2 for ANDing an inverted one of an output signal from the OR gate OR2 and the clocking signal CLK, and a D flip-flop FF2 including an input terminal for inputting the output signal from the OR gate OR2 and a clock terminal for inputting the clocking signal CLK as a clock pulse signal.

Now, the operation of the interrupt handling unit 2 with the above-mentioned construction in accordance with the present invention will be described in detail.

Table 1 represents how the encoder 7 handles sixteen interrupts.

## TABLE 1

| INTERRUPT INPUT | | | | | | | | | STATUS | | | | INTERRUPT |
| 1 | 2 | 3 | 4 | 5 | 6 | 7 | ..... | 16 | S1 | S2 | S3 | S4 | $\overline{\text{INT}}$ |
|---|---|---|---|---|---|---|---|---|---|---|---|---|---|
| 0 | 0 | 0 | 0 | 0 | 0 | 0 | ..... | 0 | X | X | X | X | 1 |
| 1 | 0 | 0 | 0 | 0 | 0 | 0 | ..... | 0 | 0 | 0 | 0 | 0 | 0 |
| 0 | 1 | 0 | 0 | 0 | 0 | 0 | ..... | 0 | 1 | 0 | 0 | 0 | 0 |
| 0 | 0 | 1 | 0 | 0 | 0 | 0 | ..... | 0 | 0 | 1 | 0 | 0 | 0 |
| 0 | 0 | 0 | 1 | 0 | 0 | 0 | ..... | 0 | 0 | 0 | 1 | 0 | 0 |
| 0 | 0 | 0 | 0 | 1 | 0 | 0 | ..... | 0 | 0 | 0 | 0 | 1 | 0 |
| . | . | . | . | . | . | . | ..... | . | . | . | . | . | . |
| . | . | . | . | . | . | . | ..... | . | . | . | . | . | . |
| . | . | . | . | . | . | . | ..... | . | . | . | . | . | . |

The number of interrupts may be modified as mentioned above and hence the processing capacity of the decoder 3 may be enlarged or reduced in accordance with the number of interrupts to be used, so as to handle the desired number of interrupts.

On the other hand, respectively in response to the write signals WR1 and WR2 the mask and latch registers 4 and 5 latch the desired information from the microprocessor 1 and outputs the mask and latch signals MSK and L/T to one input terminals of the OR gate OR1 and NOR gate NOR, respectively. As a result, when the mask signal MSK is logic "1", the corresponding interrupt input signal, or the interrupt input signal INT1 as shown in Fig. 3, applied to the other input terminal of the OR gate OR1 is masked; when the mask signal MSK is logic "0", the OR gate OR1 operates to make the interrupt input signal INT1 available.

Also, when the latch signal L/T is logic "1", the output signal from the NOR gate NOR is always logic "0" independent of the logic of the output signal from the OR gate OR1. As a result, the output signal from the OR gate OR1 through the D flip-flop FF1 is inputted to the D flip-flop FF2 via the OR gate OR2 for use in detection of a transition of the interrupt input signal INT1. On the other hand, when the latch signal L/T is logic "0", the interrupt input signal INT1 through the OR gate OR1 is inputted directly to the D flip-flop FF2

3

via the NOR and OR gates NOR and OR2, thereby resulting in generation of an interrupt signal in accordance with a level of the interrupt input signal INT1.

More particularly, in a transition detection mode, the interrupt input signal INT1 is applied to the interrupt input terminal of the interrupt unit 6 such that at the trailing edge the output signal from the OR gate OR1 sets the D flip-flop FF1 and then is inputted to the D flip-flop FF2 via the OR gate OR2. At this time, provided that the system interrupt signal $\overline{INT}$ is nonactive and any high priority interrupt signal is not generated ( in the preferred embodiment the interrupt input signal INT1 is set to have a high priority), the external clocking signal CLK is applied via an AND gate AND1 in Fig. 2 to the AND gate AND2 in the interrupt unit 6 which does not receive any interrupt yet. As a result, the logic "1" signal is applied to the input terminal D of the D flip-flop FF2 so that the interrupt output signal INTO is set to logic "1" and, at the same time, the logic "1" signal is applied to a clear terminal CLR of the D flip-flop FF1 so that the D flip-flop FF1 is cleared. The interrupt output signal INTO is applied to the encoder 7 so that the interrupt signal $\overline{INT}$ becomes active-low and hence the corresponding status signals S1-S4 are produced.

Upon receiving the interrupt signal $\overline{INT}$, the microprocessor 1 reads the status signals S1-S4 to determine an interrupt state and then generates an interrupt clear signal INTCLR based on an interrupt address signal $\overline{INTA}$ to clear the D flip-flop FF2, so as to return the D flip-flop FF2 to its initial state.

Also, when a plurality of interrupt signals are generated simultaneously, one near to the interrupt input signal INT1 is set to have a high priority. As a result, if the interrupt signal $\overline{INT}$ is active by a higher priority one of the interrupt input signals INT1-INT2, the remaining interrupt input signals are stayed at a waiting state. Therefore, the circuit operates on the next order interrupt input signal after the status signals S1-S4 have been read and then the interrupt signal $\overline{INT}$ has been cleared.

If the interrupt signal $\overline{INT}$ is active-low by generation of interrupt, the output signal from the cleared D flip-flop FF1 in the interrupt unit 6 becomes logic "0", but the clocking signal continues to be maintained at logic "0" by the AND gate AND1 so that the logic "0" output signal from the D flip-flop FF1 are not latched into the D flip-flop FF2, thereby allowing the state of the D flip-flop FF2 to be maintained naturally.

On the other hand, in a level detection mode, the active-low interrupt signal INT1 is turned into an active-high signal by passing through the OR gate OR1, the NOR gate NOR and the OR gate OR2 in order. The following operation is the same as that of the transition detection mode and hence that will not be described in detail. Herein, the D flip-flop FF1 has no effect on the whole system operation.

As hereinbefore described, in accordance with the present invention, a multiplicity of interrupts can be handled all without exception in a system utilizing the microcomputer. More particularly, the multiple interrupt handling circuit of the present invention can be IC-ed such that it can be used as an interrupt handling-dedicated IC and contained in the central processing unit, thereby allowing its simple construction.

Although the preferred embodiments of the present invention have been disclosed for illustrative purpose, those skilled in the art will appreciate that various modifications, additions and substitutions are possible, without departing from the scope and spirit of the invention as disclosed in the accompanying claims.

**Claims**

1.  A multiple interrupt handling circuit, comprising:

    mask register means for latching desired information from a microprocessor to generate a mask signal;

    latch register means for latching desired information from said microprocessor to generate a latch signal;

    a plurality of interrupt means, each for inputting said mask signal and said latch signal from said mask and latch register means and a corresponding interrupt input signal and generating in sequence a corresponding interrupt output signal in response to a clocking signal based on a system interrupt signal;

    encoding means for encoding said interrupt output signals from said plurality of interrupt means to generate a plurality of status signals; and

    control means for combining desired information signals from said microprocessor in read and write of information.

2.  A multiple interrupt handling circuit, as set forth in Claim 1, wherein each of said plurality of interrupt means includes:

    a first flip-flop being provided at an input stage of each of said plurality of interrupt means and operative at a trailing edge of said system interrupt signal; and

a second flip-flop being provided at an output stage of each of said plurality of interrupt means and operative at a leading edge of said system interrupt signal;

said first flip-flop being operative to maintain a first generated corresponding interrupt signal until said microprocessor receives said first generated corresponding interrupt signal, although another interrupt signal is generated during generation of said first generated corresponding interrupt signal.

3. A multiple interrupt handling circuit, as set forth in Claim 2, wherein said first flip-flop includes an input terminal for inputting power source, a clock terminal and an output terminal and wherein each of said plurality of interrupt means further includes:

a first gate including its output terminal being connected to said clock terminal of said first flip-flop, for ORing said corresponding interrupt signal and said mask signal to mask said corresponding interrupt signal;

a second gate for NORing an output signal from said first gate and said latch signal; and

a third gate including its one input terminal being connected to an output terminal of said second gate and its other input terminal being connected to said output terminal of said first flip-flop, For ORing an output signal from said second gate and an output signal from said first flip-flop;

whereby a transition detection mode and a level detection mode are set in accordance with a state of said latch signal.

4. A multiple interrupt handling circuit, as set forth in Claim 2 or 3, wherein said second flip-flop includes its clock terminal for inputting said clocking signal based on said system interrupt signal, its input terminal for inputting an output signal from said third gate and its output terminal being connected to a clear terminal of said first flip-flop.

5. A multiple interrupt handling circuit, as set forth in Claim 4, wherein each of said plurality of interrupt means further includes a fourth gate for ANDing an inverted one of said output signal from said third gate and said clocking signal, said fourth gates of said plurality of interrupt means including corresponding output terminals being connected to each other, for granting a priority to coinciding interrupt signals.

EP 0 469 543 A2

# F I G . 1

# F I G . 2

# F I G. 3

EP 0 469 543 A2